# EUROPEAN PATENT APPLICATION

(11) **EP 2 712 715 A2**
(43) Date of publication of application: **02.04.2014**
(21) Application number: 13162142.7
(22) Date of filing: 03.04.2013
(51) Int. Cl.: B25J 9/16

(54) **Working unit control device, working robot, working unit control method, and working unit control program**

(30) Priority: 28.09.2012 JP 2012215514
(71) Applicant: Dainippon Screen Mfg. Co., Ltd., Kyoto 602-8585 (JP)
(72) Inventor: Sasa, Yasushi, KYOTO-SHI, Kyoto 602-8585 (JP)
(74) Representative: Kilian Kilian & Partner

(57) **Abstract**

A working unit control device includes: a recognizing unit that recognizes the three-dimensional position and the three-dimensional posture of a first target; a setting unit that sets an access start location and an access route based on the three-dimensional position and the three-dimensional posture of the first target thereby recognized, the access start location indicating the three-dimensional position and the three-dimensional posture of a second target in which the second target starts to access, the access route indicating a route of movement of the second target; and a controller that controls the working unit to fit the second target to the first target. This allows control of the working unit while contact between the targets to be fitted to each other is prevented in the middle of the route of movement.

## Description

### BACKGROUND OF THE INVENTION

### Field of the Invention

The present invention relates to a working unit control device, a working robot, a working unit control method, and a working unit control program. More specifically, the present invention relates to control of a working unit to perform work on a target while the three-dimensional position and the three-dimensional posture of the target are recognized.

### Description of the Background Art

Many conventional techniques have been suggested relating to work such as grasp and assembling of a part performed by controlling a robot.

To make the robot perform such work, the three-dimensional position and the three-dimensional posture of a target are recognized first. Based on a result of the recognition, a component of the robot such as a robot hand is guided to the three-dimensional position of the target. Then, the operation of the robot hand guided to the three-dimensional position of the target is controlled to make the robot perform work on the target such as grasp. The three-dimensional position and the three-dimensional posture mentioned here are those defined by a group of three-dimensional coordinates including at least one of the spatial position and spatial posture of the target.

As described in Japanese Patent Application Laid-Open No. 2011-112400, for example, the three-dimensional position and the three-dimensional posture of a target can be recognized by using a parallax image obtained from a visual sensor, and the operation of a robot hand can be controlled based on a result of the recognition.

In the conventional technique, a straight route connecting the three-dimensional position of a target and a default position of a robot hand is generally set as a route of movement along which the robot hand moves to the three-dimensional position of the target. In this case, depending on the setting of the route of movement, the target and the robot hand may contact each other when the robot hand has reached a position close to the three-dimensional position of the target.

This generates a problem of damage on the target or the robot hand. This also makes the target interfere with movement of the robot hand, so that the robot hand cannot reach an intended final destination. Generally, these problems become serious if work to be performed involves fitting of targets.

### SUMMARY OF THE INVENTION

The present invention is directed to a working unit control device relating to control of a working unit to perform work on a target while the three-dimensional position and the three-dimensional posture of the target are recognized.

According to an aspect of the present invention, the working unit control device controls a working unit that moves a second target spaced from a first target and fits the second target to the first target geometrically. The working unit control device includes: a recognizing unit that recognizes the three-dimensional position and the three-dimensional posture of the first target; a setting unit that sets an access start location and an access route based on the three-dimensional position and the three-dimensional posture of the first target recognized by the recognizing unit, the access start location indicating the three-dimensional position and the three-dimensional posture of the second target in which the second target to be fitted to the first target starts to access the first target, the access route indicating a route of movement of the second target along which the second target moves from the access start location until the second target is fitted to the first target; and a controller that controls the working unit to make the second target reach the access start location once, and then to move the second target along the access route and fit the second target to the first target.

The working unit control device includes the recognizing unit that recognizes the three-dimensional position and the three-dimensional posture of the first target, the setting unit that sets the access start location and the access route, and the controller that controls the working unit to fit the second target to the first target. Thus, the operation of the working unit can be controlled appropriately while contact between the second and first targets is prevented in the middle of the route of movement.

Preferably, at least the three-dimensional position of the second target and the three-dimensional posture of the second target in a direction along the access route are set in the access start location.

At least the three-dimensional position of the second target and the three-dimensional posture of the second target in a direction along the access route are set in the access start location. This provides a certain degree of freedom to the three-dimensional posture of the second target, depending on the shape of the second target. Thus, the second target can be arranged according to setting of the access start location easily.

Preferably, the working unit control device further includes an image capturing unit that captures an image of the first target. The recognizing unit recognizes the three-dimensional position and the three-dimensional posture of the first target based on the image of the first target captured by the image capturing unit. The setting unit sets the access start location and the access route based on the three-dimensional position and the three-dimensional posture of the first target recognized by the recognizing unit. The image capturing unit captures an image of the first target again in the access start location. The recognizing unit updates the recognized three-dimensional position and the recognized three-dimensional posture of the first target based on the image of the first target captured in the access start location by the image capturing unit.

The image capturing unit captures an image of the first target again in the access start location. The recognizing unit updates the recognized three-dimensional position and the recognized three-dimensional posture of the first target based on the image of the first target captured in the access start location by the image capturing unit. Thus, the image capturing unit can capture an image of the first target in a position close to the first target, making it possible to obtain a parallax image of a higher resolution to be used in update of the recognized three-dimensional position and the recognized three-dimensional posture of the first target. Additionally, surfaces of the first target do not overlap each other as viewed from the image capturing unit, making it possible to obtain a more precise parallax image of the surfaces of the first target.

The present invention is also directed to a working robot relating to control of a working unit to perform work on a target while the three-dimensional position and the three-dimensional posture of the target are recognized.

The present invention is further directed to a working unit control method relating to control of a working unit to perform work on a target while the three-dimensional position and the three-dimensional posture of the target are recognized.

According to one aspect of the present invention, the working unit control method controls a working unit that moves a second target spaced from a first target and fits the second target to the first target geometrically. The working unit control method includes the steps of: (a) recognizing the three-dimensional position and the three-dimensional posture of the first target; (b) setting an access start location and an access route based on the thrce-dimerlsional position and the three-dimensional posture of the first target recognized in the step (a), the access start location indicating the three-dimensional position and the three-dimensional posture of the second target in which the second target to be fitted to the first target starts to access the first target, the access route indicating a route of movement of the second target along which the second target moves from the access start location until the second target is fitted to the first target; and (c) controlling the working unit to make the second target reach the access start location once, and then to move the second target along the access route and fit the second target to the first target.

The three-dimensional position and the three-dimensional posture of the first target are recognized, the access start location and the access route are set, and the working unit is controlled to fit the second target to the first target. Thus, the operation of the working unit can be controlled appropriately while contact between the second and first targets is prevented in the middle of the route of movement.

Preferably, the working unit control method includes a step (d) performed before the step (a). In the step (d), an image of the first target is captured. In the step (a), the three-dimensional position and the three-dianensional posture of the first target are recognized based on the image of the first target captured in the step (d). In the step (b), the access start location and the access route are set based on the three-dimensional position and the three-dimensional posture of the first target recognized in the step (a). The working unit control method further includes a step (e) performed after the step (b) and before the step (c). In the step (e), an image of the first target is captured again in the access start location set in the step (b). The working unit control method further includes a step (f) performed after the step (e) and before the step (c). In the step (f), the recognized three-dimensional position and the recognized three-dimensional posture of the first target are updated based on the image of the first target captured in the access start location in the step (e). In the step (c), the working unit is controlled to fit the second target to the first target based on the recognized three-dimensional position and the recognized three-dimensional posture of the first target updated in the step (f).

The working unit control method further includes the step (e) performed after the step (b) and before the step (c). In the step (e), an image of the first target is captured again in the access start location set in the step (b). The working unit control method further includes the step (f) performed after the step (e) and before the step (c). In the step (f), the recognized three-dimensional position and the recognized three-dimensional posture of the first target are updated based on the image of the first target captured in the access start location in the step (e). In the step (c), the working unit is controlled to fit the second target to the first target based on the recognized three-dimensional position and the recognized three-dimensional posture of the first target updated in the step (f)_{:} Thus, the image capturing unit is moved to the access start location based on the three-dimensional position and the three-dimensional posture of the first target recognized once, and captures an image of the first target again in the access start location. As a result, a more accurate three-dimensional position and a more accurate three-dimensional posture of the first target can be recognized. By correcting the access start location and the access route based on a result of the recognition, the working unit can be controlled based on a more accurate access start location and a more accurate access route.

The present invention is also directed to a working unit control program relating to control of a working unit to perform work on a target while the three-dimensional position and the three-dimensional posture of the target are recognized.

Thus, it is an object of the present invention to control a working unit while preventing contact in the middle of a route of movement between targets to be fitted.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a conceptual view of the structure of a working unit control device of a preferred embodiment of the present invention;
Fig. 2 shows an exemplary hardware structure of the working unit control device of the preferred embodiment of the present invention;
Fig. 3 is a flowchart explaining the operation of the working unit control device of the preferred embodiment of the present invention;
Figs. 4 to 6 each show an exemplary access start location and an exemplary access route of a first target;
Fig. 7 shows the operation of the working unit control device of the preferred embodiment of the present invention;
Fig. 8 is a flowchart explaining the operation of a working unit control device of a first modification of the present invention; and
Figs. 9 to 11 each show an exemplary access start location and an exemplary access route of a first target.

### DESCRIPTION OF THE PREFERRED EMBODIMENTS

A preferred embodiment of the present invention is described below by referring to the drawings.

### <Preferred Embodiment>

### <Structure>

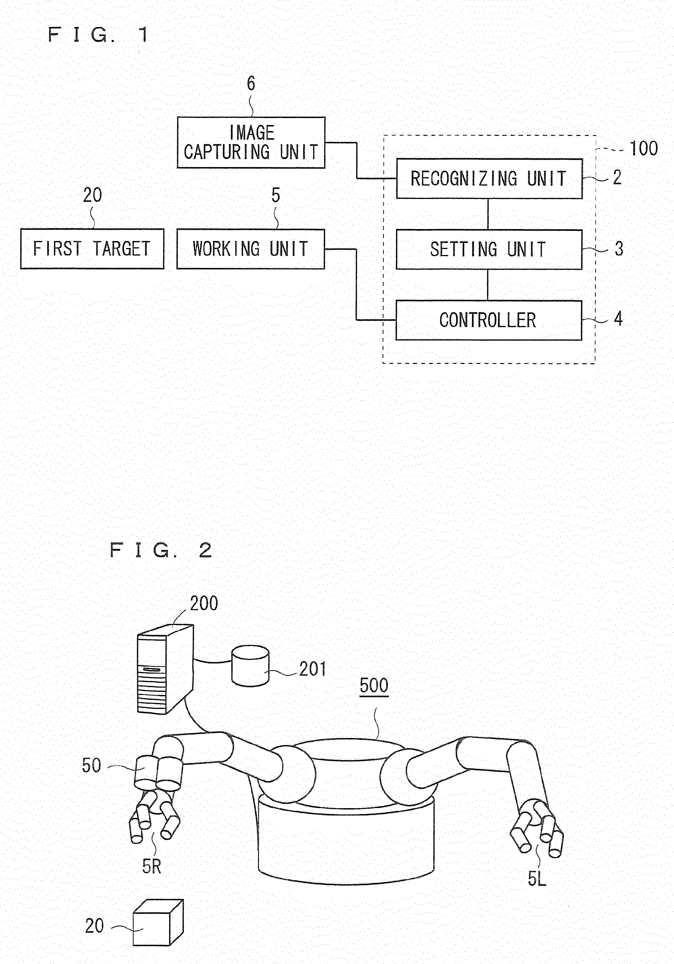

Fig. 1 is a conceptual view of the structure of a working unit control device 100 of a preferred embodiment of the present invention. The working unit control device 100 is functionally realized by a computer described later (see Fig. 2).

As shown in Fig. 1, the working unit control device 100 includes a recognizing unit 2 that recognizes the three-dimensional position and the three-dimensional posture of a first target 20 based on information about a captured image of the first target 20 output from an image capturing unit 6, a setting unit 3 that sets an access start location and an access route for the first target 20 based on the three-dimensional position and the three-dimensional posture of the first target 20, and a controller 4 that controls the operation of a working unit 5 based on a result of the setting by the setting unit 3. The access start location is described later.

Fig. 2 shows an exemplary hardware structure of the working unit control device 100. A computer 200 can realize the functions of the working unit control device 100. A recording medium 201 can be provided inside the computer 200, and stores a program to make the computer 200 function as the working unit control device 100.

As shown in Fig. 2, the computer 200 is connected with or without a cable to a working robot 500 that performs work on the first target 20.

The working robot 500 has a robot hand 5R and a robot hand 5L (corresponding to the working unit 5) that perform work on the first target 20 such as grasp, and a camera 50 (corresponding to the image capturing unit 6) attached to the robot hand 5R to allow recognition of the three-dimensional position and the three-dimensional posture of the first target 20.

The computer 200 controls the robot hands 5R and 5L and the camera 50, thereby recognizing the three-dimensional position and the three-dimensional posture of the first target 20 and performing work on the first target 20.

According to the hardware structure of the working unit 5 of Fig. 2, the working robot 500 is shown as a dual-arm robot. Meanwhile, the working robot 500 may also be a single-arm robot only with the robot hand 5R, for example.

### <Operation>

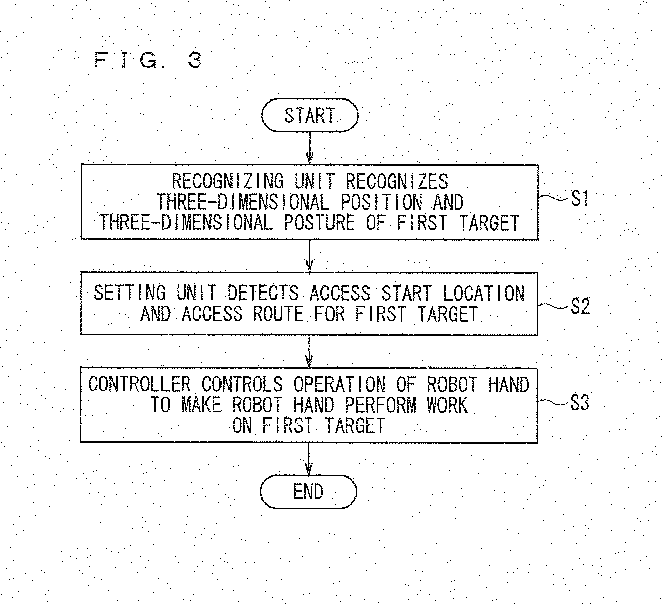

The operation of the working unit control device 100 of the preferred embodiment is described next by referring to Figs. 3 to 6. Fig. 3 is a flowchart explaining the operation of the working unit control device 100 of the preferred embodiment. More specifically, Fig. 3 explains grasp of the first target 20 with the robot hand 5R (to be specific, work of fitting the robot hand 5R as a second target to the first target 20).

As shown in Fig. 3, the recognizing unit 2 of the working unit control device 100 recognizes the three-dimensional position and the three-dimensional posture of the first target 20 (step S1)_{:}

The recognizing unit 2 acquires a parallax image of the first target 20 by using the camera 50 attached to the robot hand 5R, and generates a group of measurement points each containing three-dimensional position information.

Then, ICP (interactive closest point) matching is performed between the group of measurement points and a group of model points. The group of model points mentioned here is a point group prepared in advance for a target and composed of points each containing three-dimensional position information. The ICP matching is a way of matching performed by using the ICP algorithm between data about a point group composed of points each containing three-dimensional position information and data about a point group composed of points each containing three-dimensional position information. As a result of the ICP matching, the three-dimensional position of the group of measurement points and that of the group of model points relative to each other are recognized. Then, based on the three-dimensional position and the three-dimensional posture of the group of model points in a robot coordinate system, the three-dimensional position and the three-dimensional posture of the group of measurement points (first target 20) in the robot coordinate system can be recognized.

Next, the setting unit 3 of the working unit control device 100 sets an access start location and an access route for the first target 20 (step S2).

The access start location for the first target 20 indicates the three-dimensional position and the three-dimensional posture of the second target (here, robot hand) in which the second target starts to move to be fitted to the first target 20. The access start location is set for the first target 20 according to the type of the second target, for example. Thus, a plurality of access start locations may be set for one first target 20. The number of access start locations to be set for each part type is not limited to one.

The access route for the first target 20 is a route of movement along which the second target to be fitted to the first target 20 starts to move from the access start location to finally reach a three-dimensional position and a three-dimensional posture (final destination position and final destination posture) in which the second target is fitted to the first target 20. The access route is also set for the first target 20 according to the type of the second target, for example. A plurality of access routes may be set for one first target 20. The number of access routes to be set for each part type is not limited to one, but an access route to be used capable of achieving high fitting accuracy easily can be selected from a plurality of access routes, for example.

A three-dimensional posture the second target to be fitted to the first target 20 should keep is set in the access start location. A three-dimensional posture to be set with respect to the access route may be given a certain degree of freedom depending on the geometric shape of the second target. To be specific, only a three-dimensional posture in a direction along the access route may be set, while the second target may be in any three-dimensional posture in other directions. As an example, if the second target is a member of a shape (such as a column) concentric with an axis along the access route, the second target may be allowed to rotate freely about the axis along the access route.

The second target and the first target 20 do not contact each other on the access route until the second target reaches the final destination position and the final destination posture. To be specific, on the access route connecting each part of the second target to be fitted to the first target 20 and a corresponding part of the first target 20 to be fitted, there are no other parts of the first target 20 and no other parts of the second target to be fitted to these parts of the first target 20. The access route may be a linear or spiral route, for example.

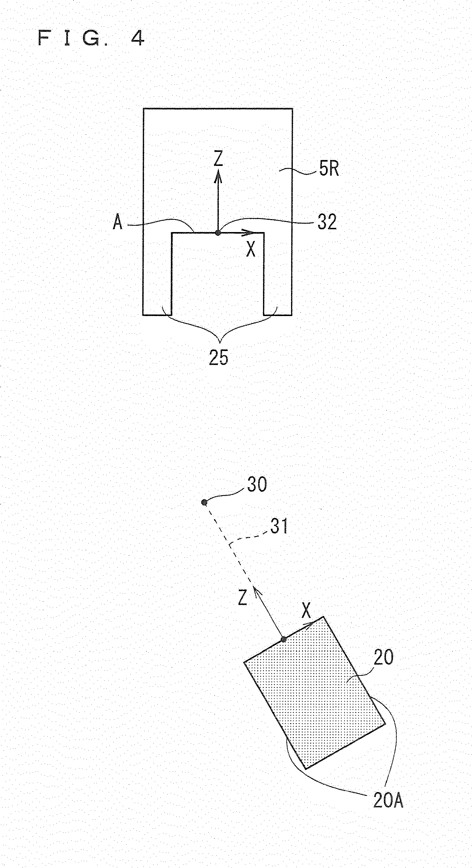

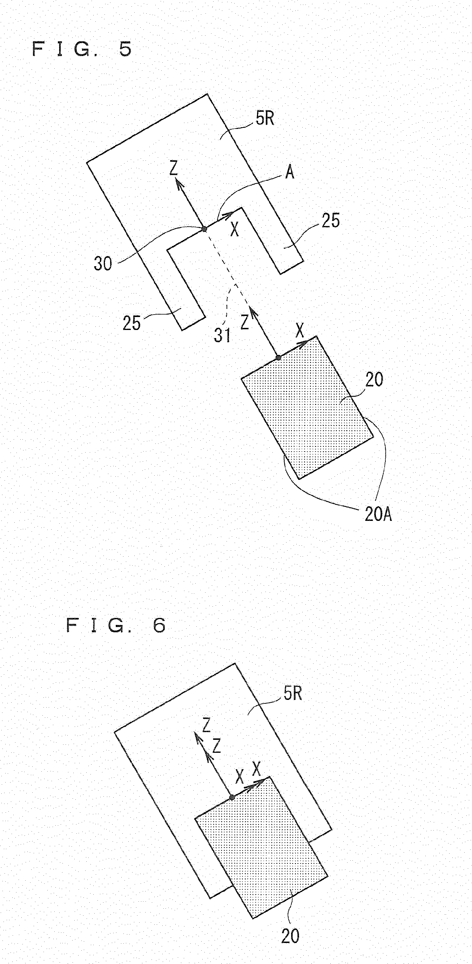

Figs. 4 to 6 each show an exemplary access start location 30 and an exemplary access route 31 for the first target 20. Fig. 4 shows the robot hand 5R as the second target placed in a default position and the first target 20. Fig. 5 shows the robot hand 5R placed in the access start location 30 and the first target 20. Fig. 6 shows a condition where the robot hand 5R grasps the first target 20.

As shown in Figs. 4 and 5, the access start location 30 is set in the direction of a Z-axis (direction normal to the first target 20) of a coordinate system on the first target 20 to be in a three-dimensional position spaced a certain distance from a surface of the first target 20. In the three-dimensional position thereby set, a three-dimensional posture the robot hand 5R should keep is set with respect to the access route 31.

The robot hand 5R is placed to comply with the three-dimensional position and the three-dimensional posture set in the access start location 30. More specifically, the robot hand 5R is placed in the three-dimensional position in the access start location 30 such that the direction of a Z-axis of a coordinate system on the robot hand 5R (direction normal to a grasping surface A) agrees with the direction of the Z axis of the coordinate system on the first target 20 set in the access start location 30.

The robot hand 5R is placed in the aforementioned three-dimensional position and the three-dimensional posture. Thus, on the access route 31 connecting each finger 25 of the robot hand 5R and a corresponding part 20A of the first target 20 to be grasped, there are no other parts of the first target 20 and no other parts of the robot hand 5R. Hence, the robot hand 5R and the first target 20 do not contact each other until the robot hand 5R reaches the final destination position and the final destination posture in which the robot hand 5R grasps the first target 20. The access route 31 is not necessarily a route along an axis of the coordinate system on the first target 20, but it may also be a route set in directions containing a plurality of axial components on the first target 20, for example.

The access start location 30 is set in a three-dimensional position, and a distance along the access route 31 of this three-dimensional position from the first target 20 can be selected freely according to the geometrical shape or the size of the second target. Meanwhile, such a distance should be determined to satisfy at least the condition of preventing contact between the second target (robot hand 5R) placed in the access start location 30 and the first target 20. Further, regarding setting of the access route 31 and the access start location 30 for a second target having the same shape of a part to be fitted while only differing in a length in the direction of the access route 31, the same access route 31 may be used while only the access start location 30 is changed for this second target. By doing so, work can be performed efficiently.

Next, the controller 4 of the working unit control device 100 controls the operation of the robot hand 5R as the working unit 5 to make the robot hand 5R perform work on the first target 20 (step S3), as described below by referring to Figs. 4 to 6.

First, the controller 4 moves the robot hand 5R placed in the default position (see Fig. 4) to the three-dimensional position in the access start location 30 (see Fig. 5). The robot hand 5R may be placed in the three-dimensional position based on a TCP (tool-center point). The TCP mentioned here is a three-dimertsional position in a robot coordinate system defined for each robot hand and which functions as a reference point for the root hand 5R to grasp a part. In the preferred embodiment, a three-dimensional position a TCP 32 should reach is a reference three-dimensional position of the robot hand 5R while the robot hand 5R grasps the first target 20. The TCP 32 is defined on a surface of the first target 20, for example.

Next, the three-dimensional posture of the robot hand 5R is changed based on the setting of a three-dimensional posture in the access start location 30. At this time, the three-dimensional posture and the three-dimensional position of the robot hand 5R may be adjusted simultaneously.

Next, the controller 4 guides the robot hand 5R along the access route 31 to make the robot hand 5R access the first target 20. At this time, the controller 4 moves the robot hand 5R such that the robot hand 5R keeps its three-dimensional posture set in the access start location 30 with respect to the access route 31. The three-dimensional posture of the robot hand 5R is set such that each finger 25 of the robot hand 5R agrees with a corresponding part 20A of the first target 20 to be grasped. Thus, by moving the robot hand 5R along the access route 31, each finger 25 of the robot hand 5R reaches the corresponding part 20A of the first target 20 to be grasped (see Fig. 6).

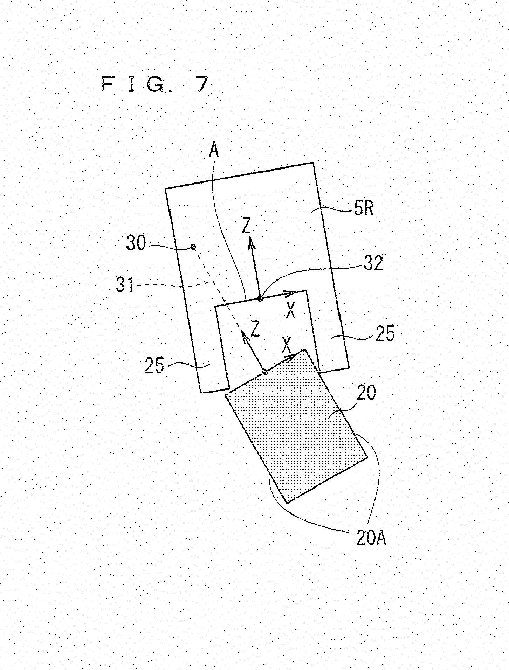

If the robot hand 5R is moved straight from the default position (see Fig. 4) to make the robot hand 5R grasp the first target 20 without consideration for the access start location 30, the robot hand 5R and the first target 20 contact each other before being fitted together appropriately, as shown in Fig. 7. In contrast, the aforementioned movement of the robot hand 5R makes it possible to prevent contact of the robot hand 5R with the first target 20 on the route of movement extending until the robot hand 5R grasps the first target 20.

This prevents damage on the first target 20 or the robot hand 5R, while preventing the first target 20 from interfering with movement of the robot hand 5R.

### <First Modification>

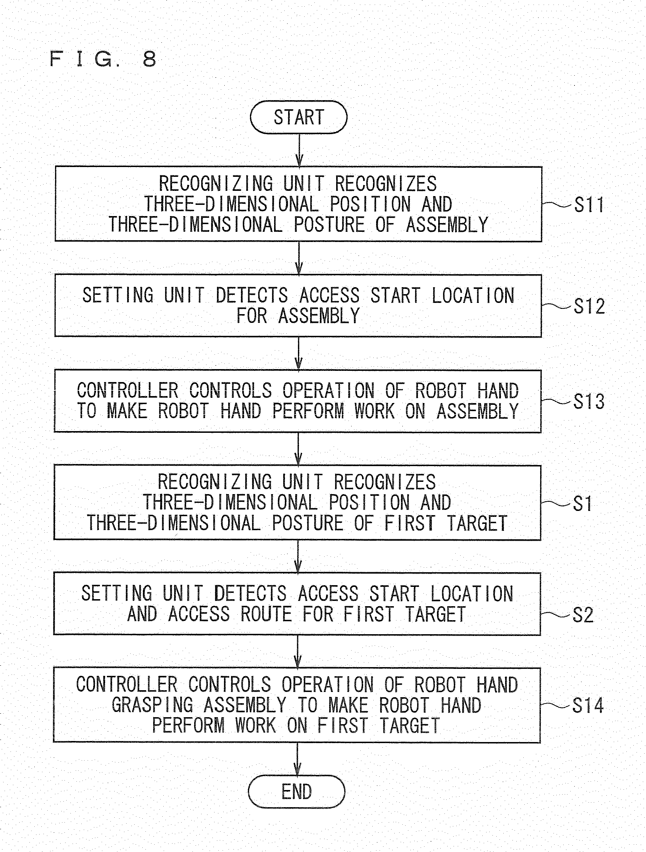

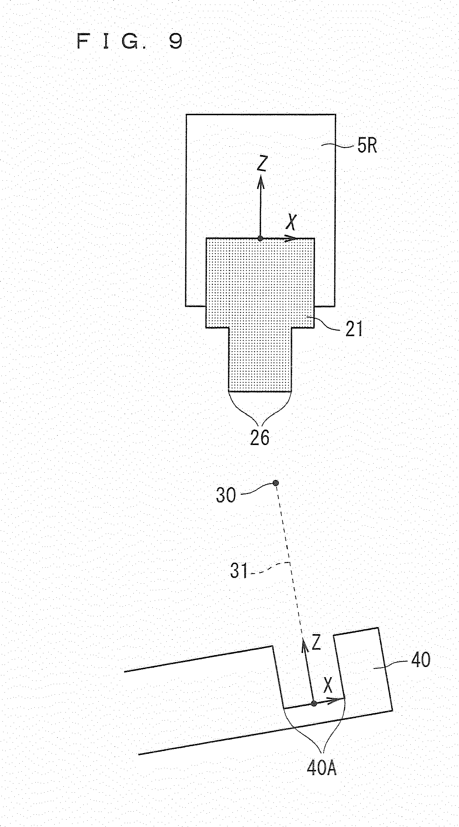

In a first modification of the preferred embodiment described below by referring to Figs. 8 to 11, the robot hand 5R grasps an assembly 21, and the assembly 21 is assembled to a first target 40 (to be specific, the assembly 21 is fitted as a second target to the first target 40). Fig. 8 is a flowchart explaining the operation of a working unit control device of the first modification. Figs. 9 to 11 each show an exemplary access start location and an exemplary access route for the first target 40.

As shown in Fig. 8, the recognizing unit 2 of the working unit control device 100 recognizes the three-dimensional position and the three-dimensional posture of the assembly 21 (step S11).

The recognizing unit 2 acquires a parallax image of the assembly 21 by using the camera 50 attached to the robot hand 5R, and generates a group of measurement points each containing three-dimensional position information. Then, ICP matching is perforined between the group of measurement points and a group of model points. As a result of the ICP matching, the three-dimensional position of the group of measurement points and that of the group of model points relative to each other are recognized. Then, based on the three-dimcnsional position and the three-dimensional posture of the group of model points in a robot coordinate system, the three-dimensional position and the three-dimensional posture of the group of measurement points (assembly 21) can be recognized in the robot coordinate system.

Next, the setting unit 3 of the working unit control device 100 sets an access start location and an access route for the assembly 21 (step S12). Like the aforementioned access start location set for the first target 20, the access start location for the assembly 21 indicates the three-dimensional position and the three-dimensional posture of a different part (here, robot hand) in which the different part starts to move to be fitted to the assembly 21. The access start location is set for the assembly 21 according to the type of a part to be fitted, for example.

Next, the controller 4 of the working unit control device 100 controls the operation of the robot hand 5R as the working unit 5 to make the robot hand 5R perform work on the assembly 21 (step S13).

The controller 4 moves the robot hand 5R along the access route to make the robot hand 5R grasp the assembly 21.

Next, the recognizing unit 2 of the working unit control device 100 recognizes the three-dimensional position and the three-dimensional posture of the first target 40 (step S1).

Then, the setting unit 3 of the working unit control device 100 sets an access start location and an access route for the first target 40 (step S2). The access start location and the access route set at this time are those for the first target 40 relating to the assembly 21: Meanwhile, if an access start location and an access route relating to the assembly 21 can be set that allow for a condition where the robot hand 5R grasps a certain position of the assembly 21, it is desirable that such access start location and such access route be selected.

Next, the controller 4 of the working unit control device 100 controls the operation of the robot hand 5R grasping the assembly 21 to make the robot hand 5R perform work on the first target 40 (step S14), as described below by referring to Figs. 9 to 11.

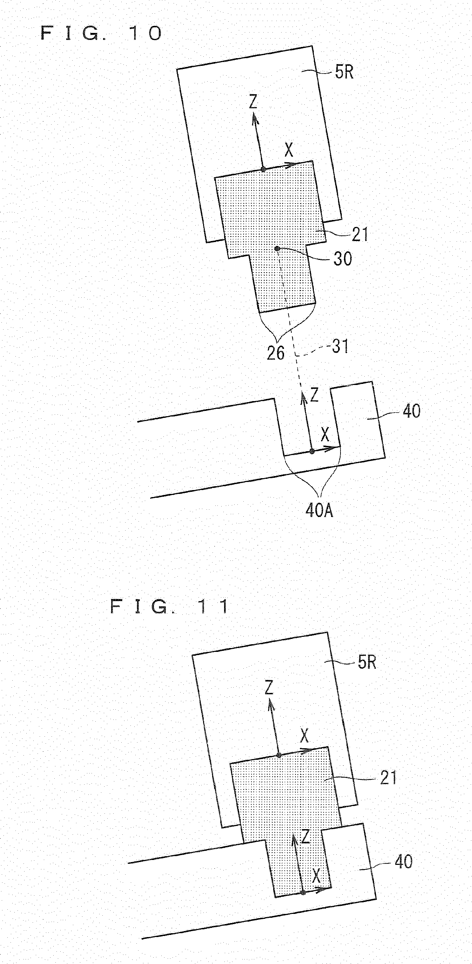

First, the controller 4 moves the assembly 21 grasped with the robot hand 5R (see Fig. 9) to the three-dimensional position in the access start location 30 (see Fig. 10). At this time, the controller 4 exerts control such that the TCP 32 of the robot hand 5R is moved to a three-dimensional position farther from the first target 40 than the access start location 30 for the first target 40.

Next, the controller 4 controls the robot hand 5R so as to guide the assembly 21 along the access route 31, thereby making the assembly 21 access the first target 40. The three-dimensional posture of the assembly 21 is set such that each assembly part 26 of the assembly 21 agrees with a corresponding part 40A of the first target 40 to receive the assembly part 26. Thus, by moving the assembly 21 along the access route 31, each assembly part 26 of the assembly 21 reaches the corresponding part 40A of the first target 40 to receive the assembly part 26 (see Fig. 11).

As a result, contact of the assembly 21 with the first target 40 can be prevented on the route of movement extending until the assembly 21 is assembled to the first target 40. This prevents damage on the first target 40 or the assembly 21; while preventing the first target 40 from interfering with movement of the assembly 21.

### <Second Modification>

In the aforementioned preferred embodiment and the first modification, regarding recognition of the three-dimensional position and the three-dimensional posture of the first target by using a parallax image obtained by the camera 50 attached to the robot hand 5R, a parallax image of a higher resolution can be obtained by moving the camera 50 to be sufficiently close to the first target. The recognizing unit 2 can recognize the three-dimensional position and the three-dimensional posture of the first target with a higher degree of accuracy if a parallax image of a higher resolution can be obtained.

A surface of the first target that cannot be reflected in a parallax image, specifically the shape of the rear surface of the first target as viewed from the camera 50, cannot be used for recognition of a three-dimensional position and a three-dimensional posture. Thus, it is desirable that the camera 50 capture an image of the first target from a direction that minimizes overlap of surfaces of the first target.

The access start location described in the preferred embodiment can be a three-dimensional position as close as possible to the first target in a range that prevents contact between the second and first targets. Thus, work can be preformed more accurately by capturing an image of the first target again by using the camera 50 in the access start location, and by recognizing the three-dimensional position and the three-dimensional posture of the first target again based on a resultant parallax image. If the access start location and the access route are changed in response to the second recognition of the three-dimensional position and the three-dimensional posture of the first target, the recognized three-dimensional position and the recognized three-dimensional posture of a part such as an assembly may be updated according to the change.

On the access route of the preferred embodiment connecting each part of the second target to be fitted to the first target and a corresponding part of the first target to be fitted, there are no other parts of the first target and no other parts of the second target to be fitted to these parts of the first target. To be specific, if the access route is set as a linear route, particularly, surfaces of the first target do not overlap each other as viewed from the camera 50 arranged on the access route. This does not generate a surface in the first target to become a rear surface that cannot be subjected to recognition of a three-dimensional position and a three-dimensional posture. Thus, by arranging the camera 50 on the access route and making the camera 50 capture an image of the first target again, the three-dimensional position and the three-dimensional posture of the first target can be recognized more accurately.

### <Effects>

According to the preferred embodiment of the present invention, the working unit control device includes: the recognizing unit 2 that recognizes the three-dimensional position and the three-dimensional posture of the first target; the setting unit 3 that sets an access start location and an access route based on the recognized three-dimensional position and the recognized three-dimensional posture of the first target, the access start location indicating the three-dimensional position and the three-dimensional posture of the second target (assembly 21 or robot hand 5R itself) in which the second target starts to access for fitting, the access route indicating a route of movement of the second target; and the controller 4 that controls the working unit 5 to fit the second target to the first target.

This structure allows the second target to move along the access route being a route of movement leading from the access start location to the first target and on which the second and first targets do not contact each other in the middle of the route of movement. Thus, the second and first targets can be fitted appropriately by controlling the working unit 5 (robot hand 5R) while contact between the second and first targets is prevented.

Further, according to the preferred embodiment of the present invention, at least the three-dimensional position of the second target and the three-dimensional posture of the second target in a direction along the access route are set in the access start location.

This structure provides a certain degree of freedom to the three-dimensional posture of the second target, depending on the shape of the second target. Thus, the second target can be arranged according to setting of the access start location easily.

Still further, according to the preferred embodiment of the present invention, the image capturing unit 6 captures an image of the first target again in the access start location, and the recognizing unit 2 updates the recognized three-dimensional position and the recognized three-dimensional posture of the first target based on the image of the first target captured by the image capturing unit 6 in the access start location.

This structure allows the camera 50 being the image capturing unit 6 to capture an image of the first target in a position close to the first target, thereby making it possible to obtain a parallax image of a higher resolution. Additionally, surfaces of the first target do not overlap each other as viewed from the camera 50 being the image capturing unit 6, making it possible to obtain a more precise parallax image of the surfaces of the first target. As a result, the recognized three-dimensional position and the recognized three-dimensional posture of the first target can be updated to a more accurate three-dimensional position and a more accurate three-dimensional posture.

Further, according to the preferred embodiment of the present invention, a working unit control method includes the steps of: capturing an image of the first target again in the access start location; updating the recognized three-dimensional position and the recognized three-dimensional posture of the first target based on the image of the first target captured in the access start location; and fitting the second target to the first target by controlling the working unit 5 based on the recognized three-dimensional position and the recognized three-dimensional posture of the first target thereby updated.

According to this structure, the image capturing unit 6 (camera 50) is moved to the access start location based on the three-dimensional position and the three-dimensional posture of the first target recognized once, and captures an image of the first target again in the access start location. Thus, a more accurate three-dimensional position and a more accurate three-dimensional posture of the first target can be recognized. By correcting the access start location and the access route based on a result of the recognition, the working unit 5 can be controlled based on a more accurate access start location and a more accurate access route.

In the present invention, any component of the preferred embodiment can be modified or omitted without departing from the scope of the invention.

While the invention has been shown and described in detail, the foregoing description is in all aspects illustrative and not restrictive. It is therefore understood that numerous modifications and variations can be devised without departing from the scope of the invention.

## Claims

1. A working unit control device to control a working unit (5) that moves a second target (5, 21) spaced from a first target (20) and fits said second target (5, 21) to said first target (20) geometrically, the working unit control device comprising:
a recognizing unit (2) that recognizes the three-dimensional position and the three-dimensional posture of said first target (20);
a setting unit (3) that sets an access start location and an access route based on the three-dimensional position and the three-dimensional posture of said first target (20) recognized by said recognizing unit (2), the access start location indicating the three-dimensional position and the three-dimensional posture of said second target (5, 21) in which said second target (5, 21) to be fitted to said first target (20) starts to access said first target (20), the access route indicating a route of movement of said second target (5, 21) along which said second target (5, 21) moves from said access start location until said second target (5, 21) is fitted to said first target (20); and
a controller (4) that controls said working unit (5) to make said second target (5, 21) reach said access start location once, and then to move said second target (5, 21) along said access route and fit said second target (5, 21) to said first target (20).

2. The working unit control device according to claim 1, wherein said access start location is set according to the geometrical shape of said second target (5, 21) to be spaced from said first target (20).

3. The working unit control device according to claim 1 or 2, wherein at least the three-dimensional position of said second target (5, 21) and the three-dimensional posture of said second target (5, 21) in a direction along said access route are set in said access start location.

4. The working unit control device according to any one of claims 1 to 3, wherein
said second target is said working unit (5), and
said controller (4) guides said working unit (5) from said access start location to said first target (20) along said access route, and makes said working unit (5) grasp said first target (20).

5. The working unit control device according to any one of claims 1 to 3, wherein
said second target is an assembly (21) grasped with said working unit (5), and
said controller (4) controls said working unit (5) to guide said assembly (21) from said access start location to said first target (20) along said access route, and to assemble said assembly (21) to said first target (20).

6. The working unit control device according to any one of claims 1 to 5, further comprising an image capturing unit (6) that captures an image of said first target (20), wherein
said recognizing unit (2) recognizes the three-dimensional position and the three-dimensional posture of said first target (20) based on the image of said first target (20) captured by said image capturing unit (6),
said setting unit (3) sets said access start location and said access route based on the three-dimensional position and the three-dimensional posture of said first target (20) recognized by said recognizing unit (2),
said image capturing unit (6) captures an image of said first target (20) again in said access start location, and
said recognizing unit (2) updates the recognized three-dimensional position and the recognized three-dimensional posture of said first target (20) based on the image of said first target (20) captured in said access start location by said image capturing unit (6).

7. The working unit control device according to any one of claims 1 to 6, wherein said access route is a linear route.

8. A working robot, comprising
the working unit control device as recited in any one of claims 1 to 7, and
said working unit (5).

9. A working unit control method to control a working unit (5) that moves a second target (5, 21) spaced from a first target (20) and fits said second target (5, 21) to said first target (20) geometrically, the working unit control method comprising the steps of:
(a) recognizing the three-dimensional position and the three-dimensional posture of said first target (20);
(b) setting an access start location and an access route based on the three-dimensional position and the three-dimensional posture of said first target (20) recognized in said step (a), the access start location indicating the three-dimensional position and the three-dimensional posture of said second target (5, 21) in which said second target (5, 21) to be fitted to said first target (20) starts to access said first target (20), the access route indicating a route of movement of said second target (5, 21) along which said second target (5, 21) moves from said access start location until said second target (5, 21) is fitted to said first target (20); and
(c) controlling said working unit (5) to make said second target (5, 21) reach said access start location once, and then to move said second target (5, 21) along said access route and fit said second target (5, 21) to said first target (20).

10. The working unit control method according to claim 9, wherein said access start location is set according to the geometrical shape of said second target (5, 21) to be spaced from said first target (20).

11. The working unit control method according to claim 9 or 10, wherein at least the three-dimensional position of said second target (5, 21) and the three-dimensional posture of said second target (5, 21) in a direction along said access route are set in said access start location.

12. The working unit control method according to any one of claims 9 to 11; wherein
said second target is said working unit (5), and
in said step (c), said working unit (5) is guided from said access start location to said first target (20) along said access route, and is controlled to grasp said first target (20).

13. The working unit control method according to any one of claims 9 to 11; wherein
said second target is an assembly (21) grasped with said working unit (5), and
in said step (c), said working unit (5) is controlled to guide said assembly (21) from said access start location to said first target (20) along said access route, and to assemble said assembly (21) to said first target (20).

14. The working unit control method according to any one of claims 9 to 13; further comprising the step of
(d) capturing an image of said first target (20), said step (d) being performed before said step (a), wherein
in said step (a), the three-dimensional position and the three-dimensional posture of said first target (20) are recognized based on the image of said first target (20) captured in said step (d), and
in said step (b), said access start location and said access route are set based on the three-dimensional position and the three-dimensional posture of said first target (20) recognized in said step (a),
the working unit control method further comprising the steps of
(e) capturing an image of said first target (20) again in said access start location set in said step (b), said step (e) being performed after said step (b) and before said step (c), and
(f) updating the recognized three-dimensional position and the recognized three-dimensional posture of said first target (20) based on the image of said first target (20) captured in said access start location in said step (e), said step (f) being performed after said step (e) and before said step (c), wherein
in said step (c), said working unit (5) is controlled to fit said second target (5, 21) to said first target (20) based on the recognized three-dimensional position and the recognized three-dimensional posture of said first target (20) updated in said step (f).

15. The working unit control method according to any one of claims 9 to 14, wherein said access route is a linear route.

16. A working unit control program installed on a computer and executed by said computer, thereby causing said computer to function as the working unit control device as recited in any one of claims 1 to 7 to control a working unit.
